# EUROPÄISCHE PATENTSCHRIFT

(11) **EP 1 507 973 B1**
(45) Veröffentlichungstag und Bekanntmachung des Hinweises auf die Patenterteilung: **02.01.2008**
(21) Anmeldenummer: 03749891.2
(22) Anmeldetag: 13.05.2003
(51) Int. Cl.: F03D 1/02, F03D 1/04

(54) **MANTELWINDTURBINE**
WIND TURBINE WITH SHEATH
TURBINE EOLIENNE A GAINE

(30) Priorität: 14.05.2002 DE 10221544
(43) Veröffentlichungstag der Anmeldung: 23.02.2005
(73) Patentinhaber: Wilhelm, Alfred, 53840 Troisdorf (DE); Krishnakan, Supapong, Bangkok 10210 (TH)
(72) Erfinder: Wilhelm, Alfred, 53840 Troisdorf (DE); Krishnakan, Supapong, Bangkok 10210 (TH)
(74) Vertreter: Freischem, Werner
(86) Internationale Anmeldenummer: PCT/EP2003/004990
(87) Internationale Veröffentlichungsnummer: WO 2003/095830

(56) Entgegenhaltungen:
- WO-A-01/87706
- DE-A- 2 717 043
- DE-C- 729 534
- DE-C- 743 672
- FR-A- 540 347
- US-A- 2 653 250
- US-A- 4 065 225
- US-A- 4 767 939

## Beschreibung

Die Erfindung betrifft eine Windkraftanlage mit einem Gehäuse und einem in Strömungsrichtung ersten Rotor, wobei hinter dem ersten Rotor in einem hinteren Bereich des Gehäuses ein zweiter Rotor angeordnet ist und wobei der erste Rotor und der zweite Rotor eweils auf Wellenabschnitten angeordnet sind und die Wellenabschnitte miteinander gekoppelt sind und das Gehäuse der Windkraftanlage frei drehbar ist, so dass es in Abhängigkeit der Anströmung ausrichtbar ist.

Eine Windkraftanlage dieser Art ist bekannt aus der DE-A-27 17 043.

In dieser bekannten Windkraftanlage wird der Wind von einem Eingangstrichter gefangen und den Rotoren beschleunigt zugeführt. Vor, zwischen und hinter den Rotoren sind Leitschaufeln angeordnet. Im Bereich der mittleren Leitschaufeln ist die Welle der Rotoren gelagert.

Aus der US-A-2 653 250 ist eine Windkraftanlage mit Drehmomentregelung bekannt mit zwei hintereinander angeordneten Windrädern. Zwischen diesen Windrädern sind in einem schlanken Gehäuse am Generator ein Drehmomentregler, eine Bremse und ein Planetengetriebe angeordnet. Die Rotorblätter sind um ihre Längsachse verdrehbar.

Zur Stromerzeugung sind Windkraftanlagen bekannt, deren offene Rotoren auf hohen Masten montiert werden. Aufgrund hoher Investitionskosten sind diese nur schlecht geeignet für den Inselbetrieb, d.h. Betrieb ohne Anschluss an ein Stromnetz, also in Gebieten ohne Stromversorgung.

Nachteilig bei diesen Windkraftanlagen sind die aufwändigen Steuerungs- und Antriebseinrichtungen für die Ausrichtung der Windkraftanlage in Windrichtung, wodurch die Eignung solcher Anlagen in Entwicklungsländern eingeschränkt wird. Weiterhin nachteilig bei diesen Windkraftanlagen ist das Betriebsverhalten im Schwachwindbereich und eine schwere Beherrschbarkeit im Starkwindbereich.

Aufgabe der Erfindung ist es, eine Windkraftanlage zu schaffen, die bei einer einfachen und kostengünstigen Konstruktion eine gute Energieausbeute bei geringer Nabenhöhe gewährleistet. Insbesondere soll ein breiter nutzbarer Betriebsbereich vom Schwachwindbereich bis zum Starkwindbereich abgedeckt werden.

Diese Aufgabe wird erfindungsgemäß dadurch gelöst, dass der erste Rotor weniger Rotorblätter aufweist als der zweite Rotor und der Anstellwinkel α der Rotorblätter des ersten Rotors gegen die Maschinenachse kleiner ist als der Anstellwinkel β der Rotorblätter des zweiten Rotors gegen die Maschinenachse.

Die erfindungsgemäße Windkraftanlage hat den Vorteil, dass sie aufgrund der unterschiedlichen Blattzahl der beiden Rotoren und der unterschiedlichen Anstellwinkel der Rotorblätter eine gute Nutzung bei schwachem Wind hat und auch bei starkem Wind betrieben werden kann, weil dabei der zweite Rotor als Bremse dient.

Ausführungsbeispiele der erfindungsgemäßen Windkraftanlage sind in den Zeichnungen dargestellt und werden im folgenden näher beschrieben.

Es zeigen
Figur 1: eine Seitenansicht einer ersten Ausführungsform der Windkraftanlage,
Figur 2: eine zweite Ausführungsform der Windkraftmaschine,
Figur 3: die Vorderansicht der Windkraftmaschine nach Figur 2,
Figur 4: eine dritte Ausführungsform der Windkraftmaschine,
Figur 5: eine Vorderansicht der Windkraftmaschine nach Figur 4.

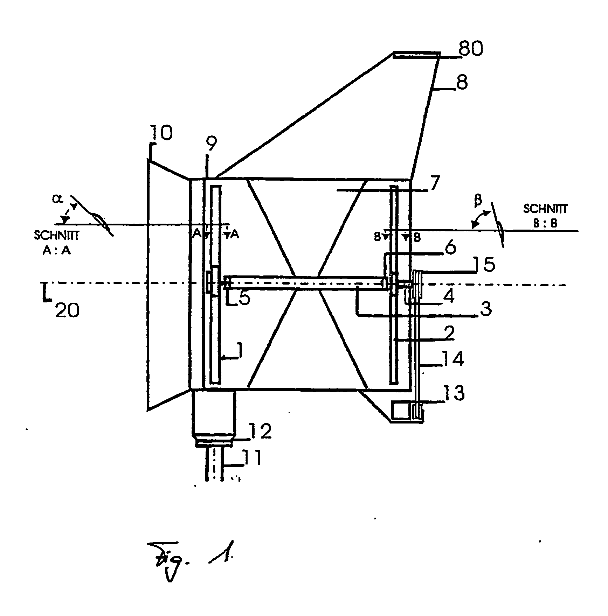

In Figur 1 dargestellt ist die Seitenansicht einer Windkraftmaschine mit einem Gehäuse 9 in dem hintereinander zwei Rotoren angeordnet sind. Es befinden sich im vorderen Bereich des Gehäuses der erste Rotor 1 und im hinteren Bereich des Gehäuses der zweite Rotor 2. Beide Rotoren sind auf derselben durchgehenden Welle 4 montiert, die in einem vorderen Lager 5 und einem hinteren Lager 6 drehbar gelagert sind. Über das hintere Wellenstück der Welle 4 erfolgt die Übertragung der Abtriebsleistung der Rotoren an das Rad 15 und weiter über einen Riementrieb 14 an den Generator 13 zur Stromerzeugung.

Stromab hinter dem ersten Rotor 1 und vor dem Rotor 2 sind Statoren 7 angeordnet zur Optimierung der Anströmung auf den zweiten Rotor 2. Am Eintritt in das Gehäuse 9 verfügt die Windkraftanlage über eine Einlauftrichter 10. Der Einlauftrichter 10 dient der Beschleunigung der Anströmung an den ersten Rotor 1. Am Rohr 3, welches die Welle 4 zwischen dem ersten Rotor 1 und dem zweiten Rotor 2 umgibt, sind die Statoren 7 abgestützt, was zu einer Erhöhung der Stabilität der gesamten Konstruktion führt.

In einer nicht dargestellten Alternative kann auf das die Welle 4 umgebende Rohr 3 verzichtet werden und die Statoren 7 können frei enden.

Der Anstellwinkel a der Rotorblätter des ersten Rotors 1 gegen die Maschinenachse (Schnitt A:A) ist kleiner als der Anstellwinkel β der Rotorblätter des zweiten Rotors 2 gegen die Maschinenachse (Schnitt B:B). Durch den kleinen Anstellwinkel a der Rotorblätter des ersten Rotors 1 wird der Anlauf der Windkraftanlage auch bei schwacher Windströmung erleichtert. Der erleichterte Anlauf der Windkraftanlage im Schwachwindbereich erlaubt die Montage der Windkraftanlage auf einer geringen Nabenhöhe, insbesondere im Bereich von 2 bis 3 Metern.

Die Windkraftanlage ist durch das Lager 12 frei drehbar um die Achse des Turmes 11 auf dem Turm 11 gelagert.

Das Gehäuse 9 der Windkraftanlage verfügt über ein Windleitwerk 8. Durch die Windströmung am Windleitwerk 8 wird die frei drehbare Windkraftanlage in die Windrichtung ausgerichtet. Zur Optimierung der Strömung am Windleitwerk 8 verfügt dieses über Winglets 80.

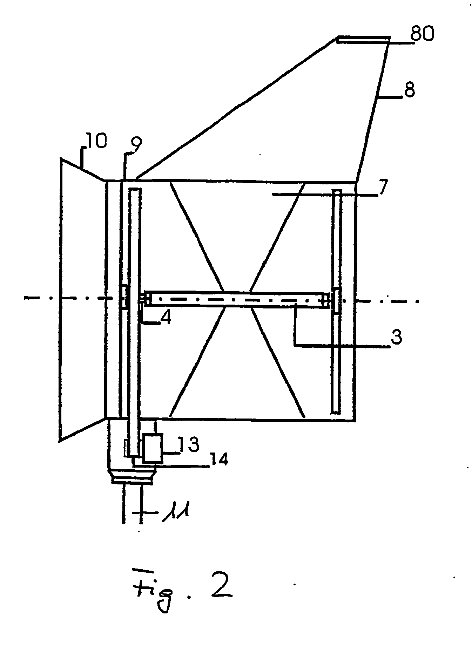

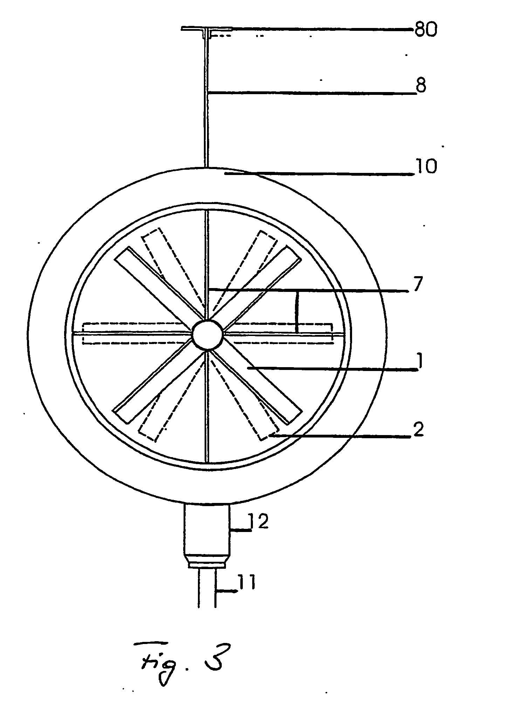

In Figur 2 und 3 dargestellt ist eine weitere Ausführungsform der erfindungsgemäßen Windkraftanlage. Gleiche Bezugszeichen bezeichnen dieselben Elemente der Windkraftanlage wie in der Beschreibung zu Figur 1.

Der Abtrieb der Leistung erfolgt über geeignete Mittel wie beispielsweise einen Treibriemen14 direkt vom ersten Rotor 1 an den Generator 13, der sich im Fuß der Windkraftanlage auf dem Turm 11 befindet.

Figur 3 zeigt die Vorderansicht einer erfindungsgemäßen Windkraftanlage mit den Blättern des ersten Rotors 1, Stator 7 und den Blättern des zweiten Rotors 2 (gestrichelt dargestellt). In dieser Darstellung erkennbar ist die Ausrüstung des Windleitwerkes 8 mit Winglets 80.

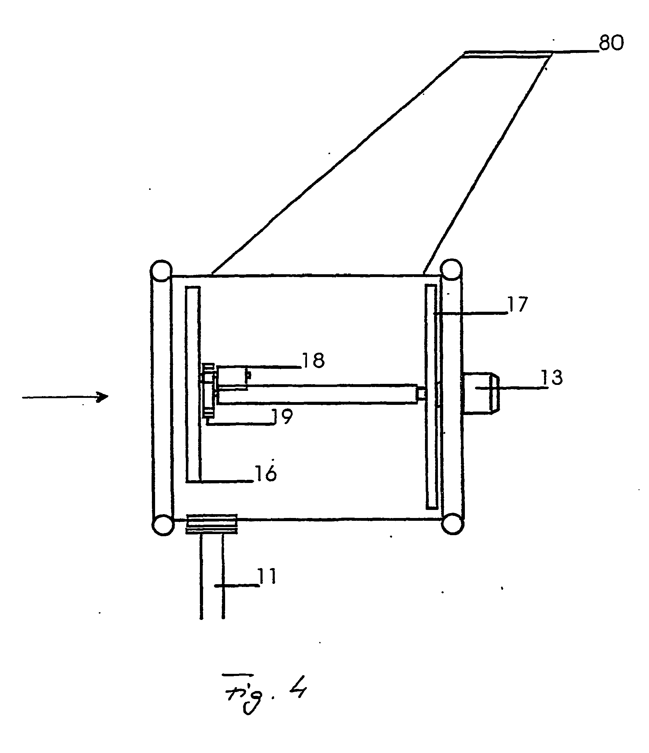

In Figur 4 dargestellt ist eine weitere Ausführungsform der erfindungsgemäßen Windkraftanlage. Die Windkraftanlage wird in Richtung des Pfeiles angeströmt. Der erste Rotor 16 ist über ein Untersetzungsgetriebe 18, 19 mit dem zweiten Rotor 17 gegenläufig gekoppelt. Die Abtriebsleistung der Rotoren wird mittels eines Generators 13 in elektrische Energie umgewandet. Die gegenläufige Rotation der Rotoren 16 und 17 gestattet den Verzicht auf Statoren, da durch die gegenläufige Rotation des zweiten Rotors 17 eine optimale Anströmung an den zweiten Rotor 17 dennoch gewährleistet ist.

Durch das Untersetzungsgetriebe 18, 19 ist es möglich, das der erste Rotor 16 im Betrieb sehr hohe Drehzahlen erreicht und die Anlage auch bei niedrigen Windgeschwindigkeiten leicht anlaufen kann. Die zueinander parallelen Wellen des ersten Rotors 16 und des zweiten Rotors 17 sind um einen Abstand versetzt.

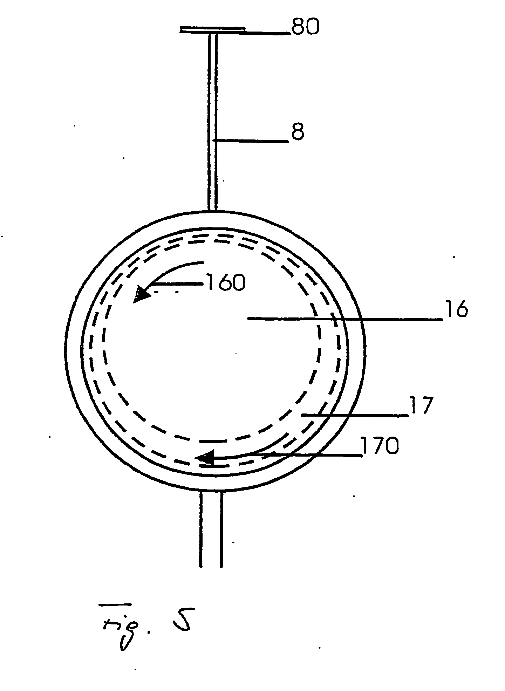

In Figur 5 dargestellt ist eine Vorderansicht der Ausführungsform der Windkraftanlage nach Figur 4. Angedeutet durch die gestrichelten Kreise ist, dass der erste Rotor 16 zum zweiten Rotor 17 leicht versetzt ist und die beiden Rotoren 16, 17 gegenläufig rotieren, dargestellt durch den Pfeil 160, der die Drehrichtung des ersten Rotors 16 angibt und den Pfeil 170, der die Drehrichtung des zweiten Rotors 17 angibt.

Vorteilhafterweise ist der erste Rotor 1, 16 vor oder in Höhe der Drehachse der Windkraftanlage, d.h. der Achse des Turmes 11 angeordnet. Der erste Rotor 1, 16 und/oder der zweite Rotor 2, 17 können über drei oder mehr Rotorblätter verfügen, wobei die Rotorblätter insbesondere eine leicht gebogene oder verwundene Form aufweisen können.

In einer weiteren, nicht dargestellten vorteilhaften Ausführung der erfindungsgemäßen Windkraftanlage sind Mittel vorgesehen, um den Anstellwinkel α der Rotorblätter des ersten Rotors 1, 16 und/oder den Anstellwinkel β des zweiten Rotors 2, 17 verstellen zu können.

Zur Beruhigung der Eintrittsströmung in die Windkraftanlage kann eine weitere Statoranordnung vor dem ersten Rotor vorgesehen sein. Es können Mittel vorgesehen sein, um die Maschinenachse (20) der Windkraftanlagen aus der horizontalen Lage zu verschwenken, um die Windkraftanlage als Aufwindkraftanlage zu nutzen.

## Patentansprüche

1. Windkraftanlage mit einem Gehäuse (9) und einem in Strömungsrichtung ersten Rotor (1,16), wobei hinter dem ersten Rotor (1,16) in einem hinteren Bereich des Gehäuses (9) ein zweiter Rotor (2,17) angeordnet ist und wobei der erste Rotor (1,16) und der zweite Rotor (2,17) jeweils auf Wellenabschnitten angeordnet sind und die Wellenabschnitte miteinander gekoppelt sind und das Gehäuse (9) der Windkraftanlage frei drehbar ist, so dass es in Abhängigkeit der Anströmung ausrichtbar ist, **dadurch gekennzeichnet, dass** der erste Rotor (1,16) weniger Rotorblätter aufweist als der zweite Rotor (2,17) und der Anstellwinkel (α) der Rotorblätter des ersten Rotors (1,16) gegen die Maschinenachse (20) kleiner ist als der Anstellwinkel (β) der Rotorblätter des zweiten Rotors (2,17) gegen die Maschinenachse (20).

2. Windkraftanlage nach Anspruch 1, **dadurch gekennzeichnet, dass** der erste Rotor (16) und der zweite Rotor (17) gegenläufig rotieren.

3. Windkraftanlage nach Anspruch 1, **dadurch gekennzeichnet, dass** die Wellenabschnitte der Rotoren (1,2,16,17) von der selben durchgehenden Welle (3) gebildet sind.

4. Windkraftanlage nach einem der vorherigen Ansprüche, **dadurch gekennzeichnet, dass** zwischen dem ersten Rotor (1,16) und dem zweiten Rotor (2,17) zumindest eine erste Statoranordnung (7) vorgesehen ist.

5. Windkraftanlage nach einem der vorherigen Ansprüche, **dadurch gekennzeichnet, dass** die Wellenabschnitte der Rotoren (1,2,16,17) zwischen dem ersten Rotor (1,16) und dem zweiten Rotor (2,17) von einem Rohr (3) umgeben ist, mit dem die Statoranordnung (7) verbunden ist.

6. Windkraftanlage nach einem der vorherigen Ansprüche, **dadurch gekennzeichnet, dass** der Wellenabschnitt des ersten Rotors (1,16) über ein Getriebe (18,19) mit dem Wellenabschnitt des zweiten Rotors (2,17) verbunden ist.

7. Windkraftanlage nach einem der vorherigen Ansprüche, **dadurch gekennzeichnet, dass** das Gehäuse (9) über ein Windleitwerk (8) verfügt.

8. Windkraftanlage nach Anspruch 7, **dadurch gekennzeichnet, dass** das Windleitwerk (8) über ein Querleitwerk (Winglet (80)) verfügt.

9. Windkraftanlage nach einem der vorherigen Ansprüche, **dadurch gekennzeichnet, daß** zur selbsttätigen Verkleinerung des Anstellwinkels (α) der Rotorblätter des ersten Rotors (1,16) und/oder des Anstellwinkels (β) des zweiten Rotors (2,17) in Folge der Anströmlast die Rotorblätter des ersten Rotors (1,16) und/oder die Rotorblätter des zweiten Rotors (2,17) drehelastisch um ihre Längsachse gelagert sind.

## Claims

1. Wind power plant with a housing (9) and, in the direction of flow, a first rotor (1, 16), wherein a second rotor (2, 17) is disposed after the first rotor (1, 16) in a rear region of the housing (9), and wherein the first rotor (1,16) and the second rotor (2, 17) are in each case disposed on shaft portions and the shaft portions are coupled together and the housing (9) of the wind power plant can rotate freely, so that it can be oriented in accordance with the incident flow, **characterised in that** the first rotor (1, 16) has fewer rotor blades than the second rotor (2, 17) and the angle of incidence (α) of the rotor blades of the first rotor (1, 16) with respect to the machine axis (20) is smaller than the angle of incidence (β) of the rotor blades of the second rotor (2, 17) with respect to the machine axis (20).

2. Wind power plant according to claim 1, **characterised in that** the first rotor (16) and the second rotor (17) rotate in opposite directions.

3. Wind power plant according to claim 1, **characterised in that** the shaft portions of the rotors (1, 2, 16, 17) are formed by the same continuous shaft (3).

4. Wind power plant according to any one of the preceding claims, **characterised in that** at least one first stator arrangement (7) is provided between the first rotor (1, 16) and the second rotor (2, 17).

5. Wind power plant according to any one of the preceding claims, **characterised in that** a tube (3) surrounds the shaft portions of the rotors (1, 2, 16, 17) between the first rotor (1, 16) and the second rotor (2, 17), to which tube the stator arrangement (7) is connected.

6. Wind power plant according to any one of the preceding claims, **characterised in that** the shaft portion of the first rotor (1, 16) is connected via a gear unit (18, 19) to the shaft portion of the second rotor (2, 17).

7. Wind power plant according to any one of the preceding claims, **characterised in that** the housing (9) has a wind guide mechanism (8).

8. Wind power plant according to claim 7, **characterised in that** the wind guide mechanism (8) has a transverse guide mechanism (winglet (80)).

9. Wind power plant according to any one of the preceding claims, **characterised in that,** in order to automatically reduce the angle of incidence (α) of the rotor blades of the first rotor (1, 16) and/or the angle of incidence (β) of the second rotor (2, 17) in consequence of the incident flow load, the rotor blades of the first rotor (1, 16) and/or the rotor blades of the second rotor (2, 17) are mounted so as to be rotatably resilient about their longitudinal axis.

## Revendications

1. Installation éolienne pourvue d'un coffrage (9) et d'un premier rotor dans le sens d'écoulement (1, 16), dans laquelle derrière le premier rotor (1, 16) dans une zone arrière du coffrage (9) se trouve un second rotor (2, 17) et dans laquelle le premier rotor (1, 16) et le second rotor (2, 17) sont respectivement disposés sur des tronçons d'arbre et les tronçons d'arbre sont couplés les uns aux autres et le coffrage (9) de l'installation éolienne est libre en rotation, de sorte qu'elle est orientable en fonction du souffle du vent, **caractérisée en ce que** le premier rotor (1, 16) présente moins de pales de rotor que le second rotor (2, 17) et l'angle d'attaque (α) des pales du premier rotor (1, 16) par rapport à l'axe de la machine (20) est plus petit que l'angle d'attaque (β) des pales du second rotor (2, 17) par rapport à l'axe de la machine (20).

2. Installation éolienne selon la revendication 1, **caractérisée en ce que** le premier rotor (16) et le second rotor (17) tournent en sens opposé.

3. Installation éolienne selon la revendication 1, **caractérisée en ce que** les tronçons d'arbre des rotors (1,2,16,17) sont constitués du même arbre transversal (3).

4. Installation éolienne selon l'une quelconque des revendications précédentes, **caractérisée en ce qu'entre** le premier rotor (1,16) et le second rotor (2,17) se trouve au moins une première configuration de stator (7).

5. Installation éolienne selon l'une quelconque des revendications précédentes, **caractérisée en ce que** les tronçons d'arbre des rotors (1, 2, 16, 17) entre le premier rotor (1, 16) et le second rotor (2, 17) sont entourés d'un tube (3), auquel la configuration de stator (7) est connectée.

6. Installation éolienne selon l'une quelconque des revendications précédentes, **caractérisée en ce que** le tronçon d'arbre du premier rotor (1, 16) est connecté par l'intermédiaire d'un engrenage (18, 19) au tronçon d'arbre du second rotor (2, 17).

7. Installation éolienne selon l'une quelconque des revendications précédentes, **caractérisée en ce que** le coffrage (9) dispose d'un empennage de vent (8).

8. Installation éolienne selon la revendication 7, **caractérisée en ce que** l'empennage de vent (8) dispose d'un empennage transversale (ailette (80)).

9. Installation éolienne selon l'une quelconque des revendications précédentes, **caractérisée en ce que** pour la réduction automatique de l'angle d'attaque (α) des pales du premier rotor (1, 16) et/ou de l'angle d'attaque (β) et du second rotor (2, 17) résultant de la contrainte de soufflage les pales du premier rotor (1, 16) et/ou les pales du second rotor (2, 17) reposent sur des paliers de manière élastique et rotative autour de leur axe longitudinal.
